# EUROPEAN PATENT APPLICATION

(11) **EP 3 112 079 A1**
(43) Date of publication of application: **04.01.2017**
(21) Application number: 14883260.3
(22) Date of filing: 25.02.2014
(51) Int. Cl.: B23K 28/02, B23K 9/24, B23K 11/11, B23K 9/00

(54) **HYBRID WELDER**

(30) Priority: 24.02.2014 KR 20140021530; 24.02.2014 KR 20140021531
(71) Applicant: Howon Co. Ltd., Gwangju 506-803 (KR)
(72) Inventor: LEE, Min Seok, Gwangju 502-768 (KR); CHOI, Hyun Bum, Seoul 157-765 (KR)
(74) Representative: Zacco Sweden AB
(86) International application number: PCT/KR2014/001530
(87) International publication number: WO 2015/125991

(57) **Abstract**

A hybrid welder includes a main body, a robot arm provided to be rotatable with respect to the main body, a spot welding gun provided to an end portion of the robot arm so as to carry out spot welding at a joining area of the subject being welded, an arc-welding torch provided to the end portion of the robot arm so as to carry out arc-welding at the joining area of the spot-welded subject being welding, and a fixing part for firmly fixing the main body. Since the present invention can carry out, differently from a conventional technique, two kinds of welding at one position without moving parts when carrying out the spot welding and the carbon dioxide arc-welding for two or more members, labor costs can be reduced and productivity can be maximized, and each welding facility can be individually separated, thereby facilitating maintenance.

## Description

### [Technical Field]

The present invention relates to a hybrid welder, and more particularly, to a hybrid welder that allows to reduce labor costs and maximize productivity since two kinds of welding are performed at one place without moving parts when two or more members are spot-welded and carbon dioxide arc-welded, and allows to easily perform the maintenance thereof since each welding apparatus is separable individually.

### [Background Art]

Generally, spot-welding that is referred to as point welding is a kind of welding that couples two metal plates by inserting an overlapping portion of two metal plates between a moving electrode and a fixed electrode, pressing the portion, and having a current flow, and widely used for manufacturing a structure made with relatively thin plates such as a car body of a vehicle.

Although a large spot-welder, such as a robot arm, is used for a large panel of the car body in the vehicle to be spot-welded, welding is performed by a small welder using an air cylinder for a small panel.

Meanwhile, since the size of the panel of the car body corresponding to a welding target is relatively small, the small welder can produce products of an excellent quality when having functions of welding at an exact position and also smoothly proceeding operations for welding.

Accordingly, when the carbon dioxide arc-welding and the spot-welding are performed at each member forming the car body, there are many problems in that much labor force and time are required since the parts have to be moved to each welder according to each process, productivity is significantly reduced since continuity of operations is not obtained, a wider machine space is required since the separately provided carbon dioxide arc-welder and spot-welder have to be installed, and the like. Accordingly, necessity for improving the above problems is required.

The related art of the present invention is disclosed in Korean Unexamined Utility Model Registration Application Publication No. 20-1999-002782 (Jan, 25. 1999, title of the invention: Welding machine for vehicle floor panel).

### [Disclosure]

### [Technical Problem]

The present invention is directed to providing a hybrid welder for solving inconvenience of moving parts according to each process for performing carbon dioxide arc-welding and spot-welding at each member forming the parts when the parts requiring two or more kinds of welding such as a car body are welded, greatly improving productivity by reducing labor force and time, reducing a machine space, and easily maintaining the welder by separating an arc-welding gun and a spot-welding tip from a robot arm.

### [Technical Solution]

One aspect of the present invention provides a hybrid welder including: a main body; a robot arm pivotably provided with respect to the main body; a spot-welding gun that is provided at an end of the robot arm and spot-welds a bonding area of target welding subjects; an arc-welding torch that is provided at an end of the robot arm and arc-welds a bonding area of the spot-welded target welding subjects; and a fixing portion that firmly fixes the main body.

The fixing portion may include: a base frame that is fixedly installed on a bottom and supports the main body to prevent shaking of the main body from directly transferring to the bottom; a flange configured to extend from a lower edge of the main body to increase an area in contact with the base frame; and a coupling member that separably couples the flange and the base frame.

The robot arm may be coupled to the spot-welding gun and the arc-welding torch to be individually separable by a connection portion.

The connection portion may include: a rotary block rotatably provided at an end portion of the robot arm; a connecting plate separably coupled to the rotary block; a welding gun installation bracket configured to separably couple the spot-welding gun to an edge of one side of a front surface of the connecting plate; and a welding torch installation bracket configured to separably couple the arc-welding torch to the an edge of the other side of the front surface of the connecting plate.

The rotary block and the welding torch installation bracket may be each provided with an insertion hole to insert a welding wire thereinto.

### [Advantageous Effects]

The present invention can provide a hybrid welder that can solve inconvenience, differently from conventional techniques, of moving parts according to each process for performing carbon dioxide arc-welding and spot-welding at each member forming the parts when the parts requiring two or more kinds of welding such as a car body are welded, and greatly improve productivity by reducing labor force and time, and reduce a machine space.

The present invention can also provide a hybrid welder that easily maintains the welder since an arc-welding gun and a spot-welding tip can be separated from a robot arm.

### [Description of Drawings]

FIG. 1 is a side view illustrating a hybrid welder according to one embodiment of the present invention.
FIG. 2 is an enlarged view illustrating a connection structure of a main body of the hybrid welder according to one embodiment of the present invention.
FIG. 3 is an exploded perspective view illustrating the connection structure of the main body according to one embodiment of the present invention.
FIG. 4 is an enlarged perspective view illustrating an installation structure of a spot-welder gun and an arc-welding torch according to one embodiment of the present invention.
FIG. 5 an exploded perspective view illustrating the installation structure of the spot-welder gun and the arc-welding torch according to one embodiment of the present invention.

### [Modes of the Invention]

Hereinafter, embodiments of a hybrid welder according to the present invention will be described with reference to accompanying drawings. In the description, thicknesses of lines, sizes of components, and the like illustrated in the drawings may be exaggerated for clarity and convenience of explanation. In addition, some terms described below are defined by considering functions in the present invention, and meanings may vary depending on, for example, a user or operator's intentions or customs. Therefore, the meanings of the terms should be interpreted based on the scope throughout this specification.

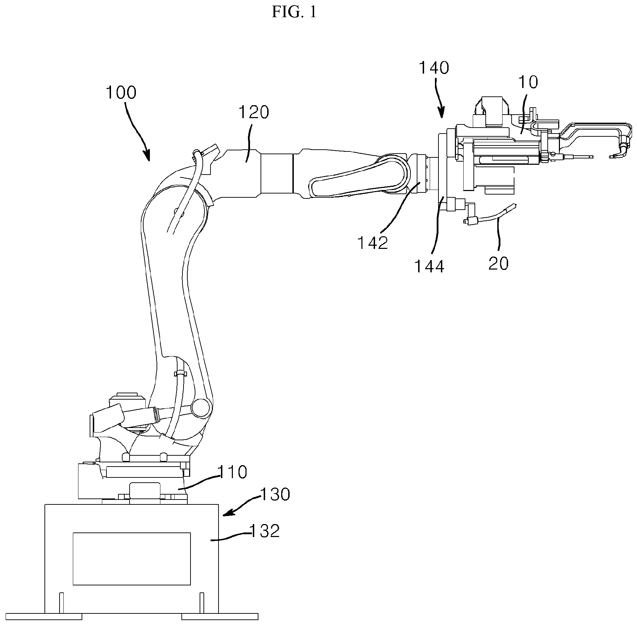

FIG. 1 is a side view illustrating a hybrid welder according to one embodiment of the present invention.

As illustrated in FIG. 1, a hybrid welder 100 according to one embodiment of the present invention that may be used for spot-welding and carbon dioxide arc-welding incudes a main body 110, a robot arm 120, a spot-welding gun 10, and an arc-welding torch 20.

The main body 110 is fixedly installed to perform a role of supporting the robot arm 120, the spot-welding gun 10, and the arc-welding torch 20. The main body 110 may be transformed in various shapes.

In addition, the robot arm 120 is connected to the main body 110 to be freely pivotable in four directions. The robot arm 120 may be formed in various shapes, and it is preferable to have a multi-joint.

In addition, the robot arm 120 is provided to be separable from the spot-welding gun 10 and the arc-welding torch 20.

Specifically, the spot-welding and carbon dioxide arc-welding are applied when parts of various industrial machines are manufactured by a welder, and is usefully used when production of products is difficult unless the carbon dioxide arc-welding and the spot-welding are applied due to properties of parts that are target welding subjects (not shown).

For example, two or more target welding subjects are bonded by welding when parts need durability, such as a car body among products that are target welding subjects of various industrial machines.

Meanwhile, the spot-welding gun 10 is provided at an end portion of the robot arm 120. In addition, the spot-welding gun 10 performs a role of spot-welding at a bonding area of the target spot-welding subjects.

In addition, the arc-welding torch 20 is provided at an end portion of the robot arm 120, and performs a role of arc-welding a bonding area of the spot-welded target welding subjects.

Here, the spot-welding gun 10 and the arc-welding torch 20 sequentially weld bonding areas of the target welding subjects by the robot arm 120 moving along a predetermined trajectory.

Particularly, the spot-welding gun 10 and the arc-welding torch 20 may be controlled to operate at the same time, or controlled only for any one thereof to operate.

When the robot arm 120 repeats welding the target welding subjects using the spot-welding gun 10 and the arc-welding torch 20, the main body 110 may be shaken. Accordingly, the main body 110 has to be firmly fixed.

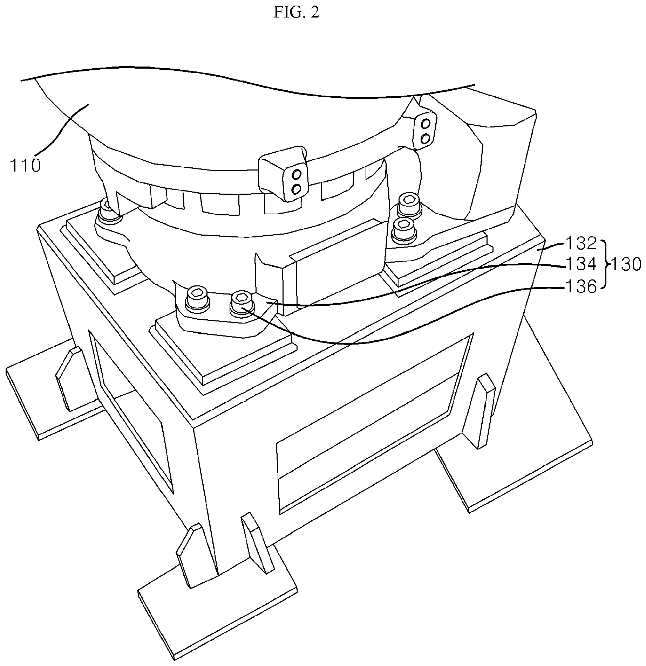

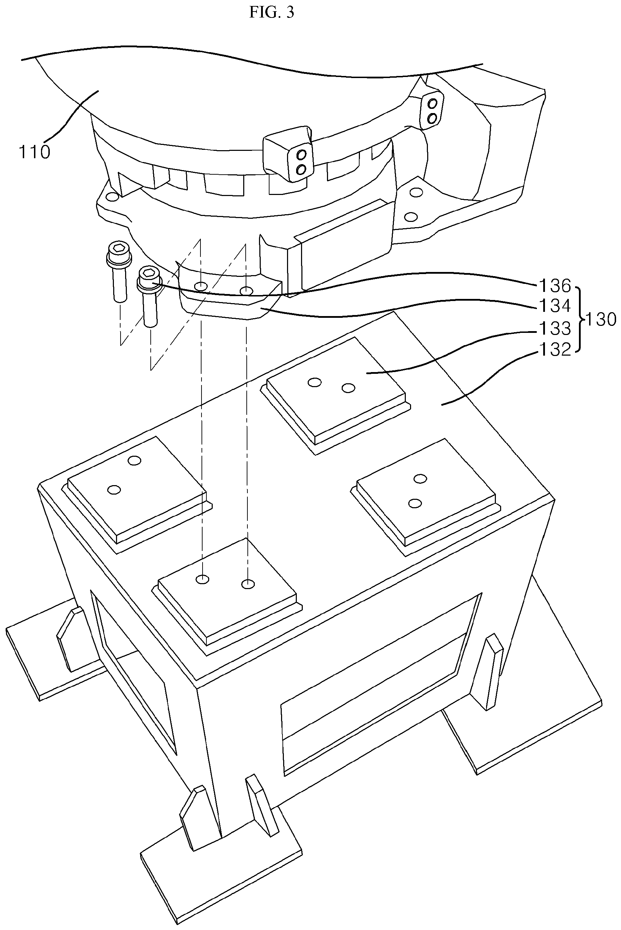

FIG. 2 is an enlarged view illustrating a connection structure of a main body of the hybrid welder according to one embodiment of the present invention, and FIG. 3 is an exploded perspective view illustrating the connection structure of the main body according to one embodiment of the present invention.

The main body 110 is firmly fixedly installed by a fixing portion 130.

The fixing portion 130 includes a base frame 132, a flange 134, and a coupling member 136.

The base frame 132 is fixedly installed on a bottom. Here, the base frame 132 is buried in a workplace or the bottom, or is firmly fixed by bolting and the like.

In addition, the base frame 132 performs a role of supporting the main body 110 and also preventing shaking of the main body 110 from being directly transferred to the bottom. Specifically, it is preferable that the base frame 132 be formed in a frame shape rather than a block shape having a solid core to disperse shocking power transferred from the main body 110. Here, the main body 110 is installed in contact with an upper side of the base frame 132.

In addition, the flange 134 extends from a lower edge of the main body 110 to increase an area in contact with the base frame 132. The flange 134 may be continuously formed along the lower edge of the main body 110, or may also be discontinuously formed.

It is preferable that an anti-vibration pad 133 be provided between the base frame 132 and the flange 134 to improve buffering power.

In addition, it is preferable that the flange 134 be integrally manufactured with the main body 110, and the flange 134 may be transformed in various shapes.

The coupling member 136 performs a role of separably coupling the flange 134 and the base frame 132. Here, the coupling member 136 is a mechanical coupling element such as a bolt. Specifically, it is preferable that the main body 110 and the base frame 132 be separably coupled to each other for replacing the base frame 132 or the hybrid welder 100.

Specifically, it is preferable that the spot-welding gun 10 and the arc-welding torch 20 be individually separated from the hybrid welder 100. This is for replacing each of the spot-welding gun 10 and the arc-welding torch 20 to easily maintain the spot-welding gun 10 and the arc-welding torch 20.

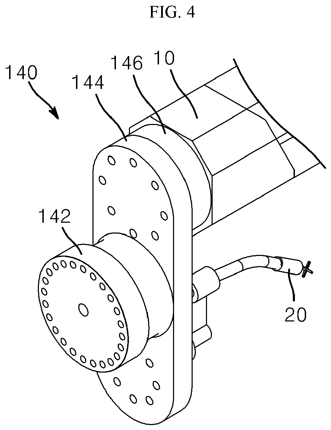

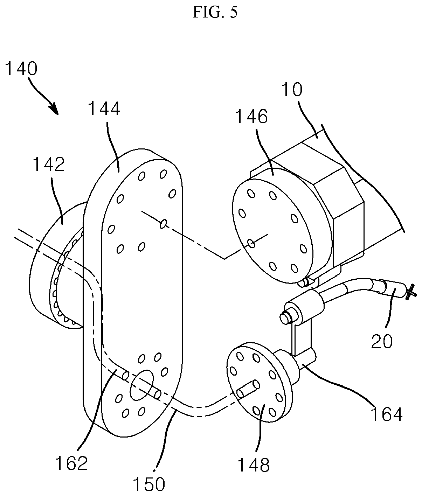

FIG. 4 is an enlarged perspective view illustrating an installation structure of a spot-welder gun and an arc-welding torch according to one embodiment of the present invention, and FIG. 5 an exploded perspective view illustrating the installation structure of the spot-welder gun and the arc-welding torch according to one embodiment of the present invention.

The robot arm 120 is separably coupled to the spot-welding gun 10 and the arc-welding torch 20 by a connection portion 140.

The connection portion 140 includes a rotary block 142, a connecting plate 144, a welding gun installation bracket 146, and a welding torch installation bracket 148.

The rotary block 142 is provided at an end portion of the robot arm 120, and is installed at the end portion of the robot arm 120 to be rotatable in a circumferential direction with respect to a direction of a shaft of the robot arm 120. In addition, the rotary block 142 is rotatably installed at the robot arm 120 with various methods.

In addition, the connecting plate 144 is separably coupled to a front surface of the rotary block 142. In addition, the connecting plate 144 may also be integrally manufactured with the rotary block 142.

In addition, the connecting plate 144 is connected the welding gun installation bracket 146 and the welding torch installation bracket 148 to support the welding gun installation bracket 146 and the welding torch installation bracket 148.

That is, the welding gun installation bracket 146 is separably coupled to an edge of one side of a front surface of the connecting plate 144. Here, the welding gun installation bracket 146 is separably coupled to the spot-welding gun 10. In addition, the connecting plate 144, the welding gun installation bracket 146, and the spot-welding gun 10 are separably coupled by various methods such as bolting.

In addition, the welding torch installation bracket 148 is separably coupled to an edge of the other side of the front surface of the connecting plate 144. In addition, the welding torch installation bracket 148 is separably coupled to the arc-welding torch 20. In addition, the connecting plate 144, the welding torch installation bracket 148, and the arc-welding torch 20 are separably coupled by various methods such as bolting.

Accordingly, the spot-welding gun 10 and the arc-welding torch 20 are coupled to the connecting plate 144 to be individually separable.

Here, the rotary block 142, the connecting plate 144, the welding gun installation bracket 146, and the welding torch installation bracket 148 may be transformed in various shapes.

In addition, a welding wire 150 is connected to the arc-welding torch 20 to supply electricity for generating arc. The welding wire 150 is connected to a power source (not shown).

Here, when the welding wire 150 is exposed to the outside of the robot arm 120, it is apprehended that the welding wire 150 may be cut or peel off sheath.

Accordingly, a first insertion hole 162 is formed in the rotary block 142 to insert the welding wire 150 extending from the power source, and a second insertion hole 164 is formed in the welding torch installation bracket 148 to insert the welding wire 150 passing through the first insertion hole 162.

The first insertion hole 162 and the second insertion hole 164 may be disposed on one straight line, or may not be disposed on one straight line. In addition, diameters and the numbers of the first insertion hole 162 and the second insertion hole 164 are not limited.

While the present invention has been described with reference to the embodiments illustrated in the drawings, these are only examples. It may be understood by those skilled in the art that various modifications and equivalent other embodiments may be made. Therefore, the scope of the present invention is defined by the appended claims and encompasses equivalents that fall within the scope of the appended claims.

## Claims

1. A hybrid welder comprising:
a main body;
a robot arm pivotably provided with respect to the main body;
a spot-welding gun that is provided at an end of the robot arm and spot-welds a bonding area of target welding subjects;
an arc-welding torch that is provided at an end of the robot arm and arc-welds a bonding area of the spot-welded target welding subjects; and
a fixing portion that firmly fixes the main body.

2. The hybrid welder of claim 1, wherein the fixing portion includes:
a base frame that is fixedly installed on a bottom and supports the main body to prevent shaking of the main body from directly transferring to the bottom;
a flange configured to extend from a lower edge of the main body to increase an area in contact with the base frame; and
a coupling member that separably couples the flange and the base frame.

3. The hybrid welder of claim 1, wherein the robot arm is coupled to the spot-welding gun and the arc-welding torch to be individually separable by a connection portion.

4. The hybrid welder of claim 3, wherein the connection portion includes:
a rotary block rotatably provided at an end portion of the robot arm;
a connecting plate separably coupled to the rotary block;
a welding gun installation bracket configured to separably couple the spot-welding gun to an edge of one side of a front surface of the connecting plate; and
a welding torch installation bracket configured to separably couple the arc-welding torch to the an edge of the other side of the front surface of the connecting plate.

5. The hybrid welder of claim 4, wherein the rotary block and the welding torch installation bracket are each provided with an insertion hole to insert a welding wire thereinto.
